# EUROPÄISCHE PATENTSCHRIFT

(11) **EP 0 250 604 B1**
(45) Veröffentlichungstag und Bekanntmachung des Hinweises auf die Patenterteilung: **29.03.1995**
(21) Anmeldenummer: 86105986.3
(22) Anmeldetag: 03.07.1986
(51) Int. Cl.: F23C 9/00, F24H 1/28, F24H 1/44

(54) **Rezirkulations-Verbrennungssystem für Heiz- und Antriebszwecke**
Combustion system with circulation for heating and driving purposes
Système de combustion avec circulation pour chauffage ou entraînement

(43) Veröffentlichungstag der Anmeldung: 07.01.1988
(73) Patentinhaber: Gukelberger, Dieter, Dipl.-Ing. (FH), D-72224 Ebhausen (DE)
(72) Erfinder: Gukelberger, Dieter, Dipl.-Ing. (FH), D-72224 Ebhausen (DE)

(56) Entgegenhaltungen:
- CH-A- 587 444
- DE-A- 1 526 038
- GB-A- 2 133 516
- US-A- 3 078 914
- US-A- 4 466 360

## Beschreibung

Die Erfindung betrifft ein Verbrennungssystem für Heiz- und Antriebszwecke mit Rezirkulation der Verbrennungsgase nach dem Oberbegriff des Hauptanspruchs 1. Ein solches System wird in DE-A-1 526 038 offenbart.

Bei dieser Heizkesselentwicklung handelt es sich um eine Verbrennungsgas- Rückführung in die Brennraumzone (in den Bereich des Flammkegels).
Es findet eine gewollte Trennung von Kern- und Randzone der Brennerflamme statt.
Dabei bleiben die Verbrennungsgase der Randzone von der Rückführung zur Nachverbrennung ausgeschlossen.

2.) Bei dem M.A.N "Raketenbrenner" (Verdampfungsprinzip) wird mit einem internen Mischrohr der äußere Flammantel aufgerissen und so umgelenkt, daß eine partielle Nachverbrennung in der Randzone des Flammkegels stattfindet.
Hier bleibt die Kernzone von der Rückführung ausgechlossen. Es handelt sich also um eine flamminterne, partielle Rezirkulation, die sich konstruktiv auf den Brenner bezieht. Die Brennkammerausbildung hat mit diesem Vorgang nichts zu tun.

3.) Das Pulsations- Verbrennungssystem von Hydrotherm wird für ein Gas- Brennwertheizsystem verwendet.
Über ein Startgebläse wird Luft in die Brennkammer gespült. Gleichzeitig öffnet ein Magnetventil die Gaszufuhr.
Bei der Zündung des Luft- Gasgemisches entsteht ein Überdruck in der Brennkammer. Dabei wird die Einlaßmembrane geschlossen. Die Gas-Luftzufuhr wird unterbrochen d.h. es findet keine Verbrennung statt.
Beim Austritt der Abgase entsteht ein Unterdruck. Die Einlaßmembrane wird geöffnet. Das Gas- Luftgemisch strömt erneut in die Brennkammer. Durch die besondere Konstruktion des Abgas- Wärmetauschers reißt am Brennkammerauslaß ein Teil des Abgsstromes ab und endzündet das Gas-Luftgemisch.
Die pulsierende Verbrennung, mit einer Häufigkeit von 60 Zündungen in der Sekunde, geht selbstständig vonstatten.
Man kann in diesem Zusammenhang von einer einmaligen, irreversiblen Nachverbrennung eines kleinen Teils der bei der Verbrennung entstehenden Abgasmenge sprechen.

Die Erfindung ist hauptsächlich auf die Baugruppenbereiche Brenner (1) und Brennkammer (2) ausgerichtet.
Nachgeordnet sind die Baugruppen oberer- und unterer Bereich des Heizkessels (3 und 4) und der Abgas - Reinigungsbereich (5), der die Kondensatauffangwanne und das Neutralisationsbecken einschließt.

Besonders hervorzuheben ist die Axial- Turbine (17), die im Bereich der rückführenden Verbrennungsgase (29), direkt vor dem Eintritt in die Flammzone (28) plaziert ist (Patent- Hauptanspruch).
Dabei ist die Brennkammer- Baugruppe (2) so ausgebildet, daß der Reibungsfaktor der gasberührenden Bauteile minimiert wird. Strömungsgünstige Gestaltung des Brennraumeinsatzes (33), die halbkreisringmuldenförmige 180 ° Umlenkungen des Verbrennungsgas- Rezirkulationskanals (32, 34) an beiden Stirnseiten des Brennraumes (29) und des zentralen,in Symmetrie-Längsachse angeordneten Kegelstumpfes mit integrierten Zündelektroden (31) sind für den minimalen Reibungsfaktor verantwortlich.
Unterstützt wird diese Maßnahme durch oberflächenglättendes Bearbeiten sämtlicher, gasberührender Bauteile.

Vergleichbare Produkte des Standes der Technik sind dagegen ausgerichtet, den Reibungsfaktor möglichst hoch anzusetzen.
Dies wird noch zusätzlich durch den Einbau sogenannter Turbulatoren unterstrichen.
Scharfkantige, reibungsintensive 90° und 180° Umlenkungen der gasführenden Bauteile sind die Regel.
Rauhe Oberflächenstrukturen, z.B. bei der gebräuchlichen Verwendung von Stahlguß- Bauteilen erhöhen ebenfalls den Reibungsfaktor.
Mit diesen Methoden wird die Verweildauer der Abgase im Bereich des wärmeübertragenden Kesselbereichs in der gewünschten Form verlängert.

Um die Flamme zu stabilisieren wurde die erfindungsgerechte, zentrifugale Treibstoffeinspr itzung mit der zentralen, rotierenden Hohlwelle (16) entwickelt.
Dieser Rotationsbrenner (Verdampfungsprinzip) verleiht dem Treibstoffgemisch einen spiralförmigen Rotationsdrall.
Mit dem zentral plazierten Kegelstumpf, der auch die Zündelektroden einschließt wird die rotierende Flammspirale ganz entscheidend beeinflußt. Auf diese Weise wird verhindert, daß sich eine dickwandige Kernzone bildet, wie dies bei gebräuchlichen Flammkegeln der Fall ist. Weitere destabilisierende Merkmale werden so vermieden und gleichzeitig der Ausbrandgrad verbessert.

Die erfindungsgemäße Axial- Turbine (17) am Ende der zentralen Hohlwelle, im Bereich der brennerseitigen Umlenkung rezirkulierender Verbrennungsgase (32), erfüllt mehrere Aufgaben:
So wird das druckbeaufschlagte Luftgemisch verwirbelt und in einen zum Treibstoffgemisch parallel, spiralförmig- verzahnten Rotationsdrall versetzt.
Gleichzeitig wird in der Startphase die anfängliche Trägheit der Verbrennungsgase durch den elektromotorischen Antrieb der Axial- Turbine überwunden. Auch hier entsteht ein parallel verlaufender, mit den beiden anderen Medien spiralförmig verzahnter Rotationsdrall.

Auf der dem Brenner (1) gegenüberliegenden Stirnseite der Brennkammer-Baugruppe (2), auf der gemeinsamen Symmetrie- Längsachse ausgerichtet, befindet sich das Abgasventil (35, 37, 38 u. 39), das den Abfluß der Abgasströme und die Verweildauer der rezirkulierender Verbrennungsgase regelt.
Die Arbeitsweise des Abgasventils läßt sich auf alle denkbaren Betriebszustände permanenter und intermittierender Verbrennungszyklen des Brenners abstimmen. So ist beispielsweise eine stufenlos gleitende, wie auch eine taktende (in offener und geschlossener Stellung) Arbeitsweise denkbar.

Die symmetrische Ausgewogenheit der einzelnen Baugruppen mit der gemeinsamen Symmetrie- Längsachse ist auch im Zusammenhang mit dem Standort der Abgasöffnungen (34 u. 68) erwähnenswert.
Die exakt zentrische Ausrichtung zur Flammspirale trägt ebenfalls zu deren Stabilisierung bei, da in diesem Fall keine exzentrische Kraftkomponente die Flammränder destabilisieren kann.

Mit dem vorstehend erläuterten technischen Konzept wird es ermöglicht, daß die Flammspirale des Brenners einen Beschleunigungsimpuls auf die rezirkuliernden Verbrennungsgase ausübt. So wird die Axial- Turbine (17) nach der Startphase in die Lage versetzt, zusätzlich zu den bereits erwähnten Aufgaben, das kinetische Energiepotential der rezirkulierenden Verbrennungsgase auf den jetzt zum El.- Generator umgepolten El.- Motor (7) zu übertragen. Die dabei gewonnene Elektroenergie wird entweder in El.- Batterien gespeichert oder über die an der Kesselaußenwand angebrachten El.- Heizmatte als Wärmeenergie an das Heizmedium des Kessels abgegeben.

Da ein kondensierender Abgas- Restwärmetauscher(4) eingesetzt wird, kommt der Wärmeübertragung des Brennkammerbereichs auf das angrenzende Heizmedium des Kessels nicht mehr die allein dominierende Bedeutung zu.
Es ist aus diesem Grunde zweckmäßig diesen Wärmetauscher so auszubilden, daß bei der Abgaskühlung die Taupunktschwelle unterschritten wird.

Die Erfindung löst die Aufgabenstellung konstruktiv in den gezeigten Anwendungsbeispielen der Figur - ① :

Konzipiert wurde ein stehender, zylindrischer Heizkessel mit integriertem Brauchwasserspeicher, der nach dem Temperaturschichtverfahren aufgebaut ist,was eine sehr weitgehende Abkühlung der Verbrennungsgase erlaubt. Die Erwärmung des Heizungsrücklaufs erfolgt im "Hoch- Temperaturbereich" des Heizkessels nach dem Durchlauferhitzer - Prinzip. Die ebenfalls zylindrische Brennkammer ist stehend im oberen Kesselabschnitt plaziert.
Der aufklappbare Brenner bildet den Abschluß des oberen Aggregatebereichs.
Der untere Teil des Kessels nimmt den kondensierenden Abgas- Restwärmetauscher auf, der als Gegenstrom- Röhrenwärmetauscher ausgebildet ist. Die Kondensat- Auffangwanne, die das Neutralisations- Granulat enthält, zusammen mit dem Abgasrohrabgang, bilden den unteren Aggregateabschluß.

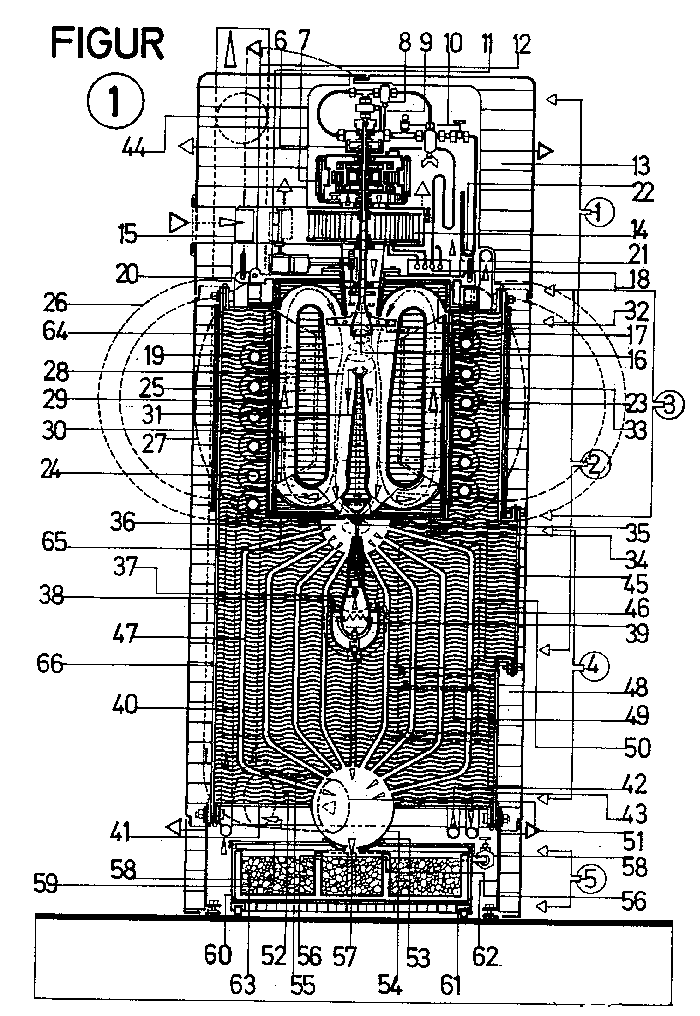

Eine weitere konstruktive Eigenart ist die totale Demontierbarkeit des Kessels. Die beiden Stirnschilde sind mit der zylindrischen Hülle so flanschförmig verbunden, daß die Hülle, nach Ablassen des Kesselwassers, abgezogen werden kann. Größere Reparaturen an der internen Installation können so problemlos ausgeführt werden.
Der Brenner (Sturzbrenner- Prinzip) zeigt einen sehr kompakten Aufbau. Auf einer zentralen Hohlwelle , die innseitig mit Spiralzügen ausgestattet werden kann, sind die wichtigsten Brennerbauteile montiert, wie Radialluftgebläse, der El.- Motor und die Ölförderpumpe. Das Luftgebläse besitzt eine saug- und druckseitige Luftmengenregelung, Voraussetzung für eine stöchiometrisch ausgewogene Verbrennung. Luftwirbel erfassen auch den El.- Motor, die zusammen mit den erwärmten Wandungen des kegelstumpfförmigen Endstückes, die komprimierte Luft kurz vor der Verbrennung in erwünschter Weise stark erhitzen. Außerdem kann so auf eine separate Kühlung des El.- Motors verzichtet werden. Da die Läufer sämtlicher elektromotorischen Antriebe auf der Hohlwelle montiert sind, kann eine separate Ölvorwärmung entfallen. Die Wärmeabstrahlung in diesem Bereich der Hohlwelle und die fliehkraftbedingte Oberflächenvergrößerung des Treibstoffnebels, ausgelöst durch die rotierende Hohlwelle, reichen aus, das Treibstoffgemisch zu verdampfen. Es findet also eine gasförmige Verbrennung statt, die zusammen mit den übrigen, vorstehend geschilderten Verbrennungskomponenten eine hohe Energieausnutzung des eingesetzten Treibstoffes und einen extrem geringen Schadstoffgehalt der Abgase gewährleisten. Unterstützt wird der Reinigungsprozeß durch die Kondensatstrecke des Abgas- Restwärmetauschers (Beisp. flüssiger Treibstoff). Die Gestaltung der Brennkammer- Baugruppe wurde bereits eingehend erläutert. Die dickwandigen Bauteile sind aus oberflächengeglätteter Keramikfaser hergestellt. Die stegartigen thermolytischen Wärmeübertragungsflächen bestehen aus Stahl und sind radial in großem Abstand angeordnet. Sie besitzen ebenfalls eine glatte Oberfläche und ausgerundete Kanten. Da die Keramikfaser- Bauteile auch eine wärmespeichernde Eigenschaft haben, wird auch in der Brennerstillstandsphase eine starke, langandauernde Wärmeabstrahlung gewährleistet.
Die halbkugelförmigen Endstücke und die Röhren des kondensierenden Abgas- Restwärmetauschers sind aus hochwertigem Chromstahl gefertigt. Die zylindrische Kondensat- Auffangwanne aus Stahlblech ist mit einem Keramik- oder Steinguteinsatz ausgerüstet.
Als Neutralisationsmittel wird Calcium- Carbonat- Granulat oder ein Material mit gleichen Eigenschaften gewählt.
Natürlich kann der Kessel auch drucklos, als Speicherinhalt des Heizkreislaufs ausgelegt werden.
Aber da eine starke Temperaturspreizung des Abgaskühlmediums wünschenswert ist, kann nur bei der konzipierten Auslegung eine effiziente Abkühlung des Abgases, je nach Betriebszustand, bis auf ca 20°C erreicht werden.
Die kompakte Bauart, die Integration von Brauchwasser- und Heizkessel, das Schichtladesystem, das Fehlen von ex- oder internen Pumpenkreisläufen, spart Herstellungskosten und hält die Aggregate- Wärmeabstrahlung in engen Grenzen.
Gleichzeitig kann das Heizgerät mit relativ einfachen Ergänzungskomponenten die Effektivität zur kleinformatigen Wärme- Kraft- Kopplung gesteigert werden, wie bereits ausführlich geschildert.
Wahlweise kann das Gerät auch mit einem spiralfedergestützen Abgasventil ausgerüstet werden. Der Antrieb erfolgt über ein konventionelles, elktromotorisch betriebenes Aggregat, das in eine wasserdichte Kapselung eingebettet ist. Die erforderliche Kühlung übernimmt der angrenzende Wassermantel.
Denkbar ist aber auch ein neu konzipierter Gasimpulsantrieb. Ein innerer Gaszylinder mit Gasfüllung wird über eine elektrische Heizwendel durch einen Stromimpuls stark erhitzt. Der entstehende überdruck öffnet das Abgasventil. Mit Beendigung des Taktes strömt ein Teil des erhitzten Gases über ein geöffnetes Magnetventil, bis der Druckausgleich hergestellt ist, in den äußeren Kühlbehälter. Das Abgasventil wird jetzt mit der Spiralfeder- Zugkraft geschlossen. Drucksensoren sorgen für exakte Steuerintervalle der Gaskontraktionen. Falls das elektrische Energiepotential entsprechend ausgelegt wird, könnte die gesamte Aufgabenstellung auch von einem elektromagnetischen Ventilantrieb erledigt werden.
Bei der Figur 1 erhölt das trichterförmige Endstück der zentralen Hohlwelle eine luftgekühlte Axial- Turbine. Zusammen mit dem brennkammerseitigen Abgasventil wird so mit einfachen Mitteln ein Einwellentriebwerk dargestellt.

Von der Zeichnung zeigt:
- Figur ①: Vertikalschnitt
Brennwertheizkessel mit Wärme- Kraft- Kopplung,
wobei die Axial- Turbine auf der zentralen Hohlwelle montiert ist, einschließlich eines im Brennraum installierten Abgasventils.

Bei der dargestellten Figur ① wird mit 1 die Baugruppe des Brenners, 2 die Baugruppe der zylinderförmigen Brennkammer, 3 die Baugruppe des oberen Bereichs des zylinderförmigen Heizkessels (Hochtemperaturzone), 4 der untere Bereich des zylinderförmigen Heizkessels (Niedertemperaturzone - Bereich des kondensierenden Abgas- Restwärmetauschers), 5 das Kondensat- Auffangbecken (Neutralisation des kontaminierten Abgaskondensats), 6 die Flügelzellen- Ölförderpumpe, 7 der El.- Motor - auch als El.- Generator genutzt, 8 das El.- Magnetventil des Ölrücklaufs, 9 das El.- Magnetventil des Ölvorlaufs, 10 der Treibstoffilter mit angeschlossener Rücklaufleitung, 11 die elektromotorisch betriebenen saug- und druckseitigen Luftklappen des Radialluftgebläses, 12 den ausfahrbaren bzw. drehbaren Stahldeckel der oberen Stirnseite der Brennkammer- Baugruppe, dient auch als Trägerplatte für die Brenner-Baugruppe, 13 die zweiteilige, mineralfasergedämmte Stahlblechabdeckhaube, 14 das Radialluftgebläse als Luftkompressor, 15 der rechteckige Luftansaugschacht, das Gehäuse des Radialgebläses einschließlich des zentrischen, kegelstumpfförmigen Druckschachtes, 16 die wahlweise mit Spiralzügen ausgestattete zentrale Hohlwelle, die an der Brennraumeinmündung eine trichterförmige Erweiterung besitzt, 17 die Axial-Turbine in luftgekühlter Hohlstegausführung, die auf der zentralen Hohlwelle des Brenneraggregates montiert ist, 18 der Elektro- Rangierverteiler des Brenners. 19 der Wassermantel des oberen Kesselbereichs (Hochtemperaturzone), 20 die obere Schildabdeckplatte des Kessels, 21 der Warmwasservorlauf (Brauchwasserversorgung), 22 der Vorlauf-Heizung, 23 die großflächig ausgebildeten, radial angeordneten Stahlblechlamellen als Wärmeübertragungsflächen für den Wärmetauscher der Heizung und die direkt angrenzende Brauchwasserfüllung des oberen Kesselbereichs, 24 der Röhren- Spiralwärmetauscher des Heizungsvorlaufs als Durchlauferhitzer, 25 die kessel- außenseitig angebrachte El.- Heizmatte als Energieabnahmestation des El.- Generators, 26 eine Formalvariante der Verbrennungsgas- Rezirkulationskanäle als Kreisring (Kugel) ausgebildet, mit extrem geringen Reibungsverlusten behaftet - in diesem Fall trifft die Bezeichnung "Rotations- Verbrennungssystem" zu, 27 eine Formalvariante der Verbrennungsgas- Rezirkulationskanäle mit ellipsoider Querschnittsfläche ausgebildet, 28 die Flammzone - der eigentliche Brennraum (Figur 1), 29 die radial angeordneten Verbrennungsgas- Rezirkulationskanäle, 30 die thermolytisch, stegartig geformten Wärmeübertragungsflächen in Stahlausführung, 31 die Zündelektroden auf einem glattflächigen Keramikfaserkegel montiert, 32 die brennerseitigen aus glattflächiger Keramikfaser bestehende ringmuldenförmige Schildplattenauskleidung als obere 180° Umlenkung der Verbrennungsgas- Rezirkulationskanäle, 33 der aus glattflächiger Keramikfaser bestehende Speicherkern des Brennraumes, 34 die abgasseitige aus glattflächiger Keramikfaser hergestellte, ringmuldenförmig gestaltete Schildplattenauskleidung, die den zentralen, kegelstumpfförmigen Hökkeransatz (radial plazierte Löcher für die Abgasführung) einschließt, 35 derspiralfedergestütze Ventilschaft mit konisch ausgebildetem kreisrundem Ventilteller, 36 der halbkugelförmige Abgassammler des Restwärmetauschers in Chromstahlausführung, 37 die Nockenwelle des Abgasventilantriebs, 38 der elektromotorische Ventilantrieb, 39 der gasimpulsgesteuerte Abgasventilantrieb, 40 der Rohreinlauf des Heizungsrücklaufs mit außenseitigem Absperrventil, 41 die untere Schildabdeckplatte (flanschförmig demontierbar ausgebildet) des zylinderförmigen Kessels, 42 der Kaltwasserzulauf mit außenseitigem Absperrventil, 43 der Kesselwasser- Entleerstutzen mit außenliegendem Absperrhahn, 44 das aggregateintegrierte Edelstahl- Abgasrohr (alternativ auch aus temperaturresistentem Kunststoffmaterial), 45 der kreisrunde Flansch (geschraubt) als Wartungsöffnung, 46 die Wasserfüllung des unteren Kesselbereichs (Niedertemperaturzone), 47 der Röhrenwärmetauscher (Gegenstromprinzip) aus Chromstahl gefertigt als Abgas- Restwärmetauscher, 48 die lackierte, mineralfasergedämmte Blechaußenhülle, 49 die aggregateintegrierten Elektrobatterien, 50 das aggregateintegrierte Ausdehnungsgefäß, einschließlich dem elektromotorisch gesteuerten Vier- Wegemischer mit den dazugehörigen Absperrarmaturen und Sicherheitsventil, 51 der Abgas- Abgangstutzen in Edelstahlausführung, 52 der Befestigungsflansch der in 55 beschriebenen Kesselausbuchtung mit eingeschnittenen Gewindebohrungen, 53 die Abgas- Gleitdichtung des Kondensateinlaufs über dem Auffangbecken, 54 die untere, kugelförmige Abgashaube des Restwärmetauschers in Chromstahlausführung, 55 die kreissegmentfförmige Ausbuchtung der unteren Schildabdeckplatte des Kessels in Stahlausführung, als Voraussetzung für berührungsfreie Führung des unteren Abgasrohrstutzens, das die problemlose Demontage der einzlenen Kesselbauteile ermöglicht, 56 die überlauföffnungen der einzelnen Beckenabschnitte des Kondensatauffangbehälters, 57 die kreisförmige Abtropföffnung des Abgassammlers, 58 die Neutralisationsfüllmenge als Granulat auf der Basis von Calcium- Hydrogencarbonat, 59 die Stahlblech- Abdeckhaube des Kondensatauffangbehälters, 61 die Laufrollen des Kondensatauffangbehälters in Stahl- oder Kunststoffausführung, 62 die höhenverstellbaren Stahlfüße des Kessels, 63 das in einzelnen Kammern aufgeteilte Keramikbecken des Kondensatauffangbehälters (altern. - temperaturbeständiges Kunststoffmaterial), 64 die zylindrische Stahlaußenwand der Brennkammer- Baugruppe, 65 die ebene, stirnseitige, auf der Abgasseite liegende Schildkappe der Brenner- Baugruppe 66 die zylindrische Stahlaußenwandung des Kessels.

Auf die Figur - ① bezogen, kann die numerische Bezeichnung auf die angegebenen Baugruppen zusammengefaßt werden:
- BAUGRUPPE ①: - Brenner -
6,7,8,9,10,11,12,13,14,15,16,17,18,49 und 50.
- BAUGRUPPE ②: - Brennkammer -
26,27,28,29,30,31,32,33,34,35.37,38,39,48,64 u. 65.
- BAUGRUPPE ③: - oberer Bereich des Heizkessels-(Hochtemperaturzone)
19,20,21,22,23,24,25,40,45,46,48 und 66
- BAUGRUPPE ④: - unterer Bereich des Heizkessels-(Niedertemperaturzone)
36,41,42,43,44,45,47,48,52,53,54,55,57 und 62
- BAUGRUPPE ⑤: - Kondensatauffangbecken-(Abgas- Reinigungsbereichs)
56,58,59,60 und 61

## Patentansprüche

1. Verbrennungssystem für Heiz- und Antriebszwecke mit Rezirkulation der Verbrennungsgase, bestehend aus einer zentral- symmetrisch aufgebauten Baugruppeneinheit (Figur 1) der Brennkammer (28) und einem als Teil der Brennkammer außenliegenden, radial angeordneten, in Längsrichtung der Brennkammer- Baugruppe verlaufenden Rezirkulationskanal der Verbrennungsgase (26, 27, 29 und 30) dadurch gekennzeichnet, daß
eine Axial- Turbine (17) am Ende einer zentralen Hohlwelle (16), im Bereich, des radial angeordneten Rezirkulationskanals (29), direkt vor dem Eintritt in die Flammzone der Brennkammer (28), angeordnet ist,
mittels der zentralen Hohlwelle (16) der Treibstoff zentrifugal- rotierend und das Luftgemisch druckbeaufschlagt (11, 14 und 15) in die Brennkammer (28) gelangen,
ein dem Brenner zentral- symmetrisch gegenüberliegendes Abgasventil (35, 37, 38 und 39) die Ableitung der Abgase regelt und
die verbrennungsgas- berührenden Wandungen im Bereich des Rezirkulationskanals und der Brennkammer (28, 29, 30, 31, 32, 33, 34, und 64) glatte, reibungsarme Oberflächen und eine abgerundete Form aufweisen.

2. Verbrennungssystem nach Anspruch 1 dadurch gekennzeichnet, daß
auf der zentralen Hohlwelle (16) sämtliche Brennerkomponenten, wie Treibstoff- Förderpumpe (6), El.- Motor / El.- Generator (7), Radialverdichter- Gebläse (14) und die Axial- Turbine (17) montiert sind.

3. Verbrennungssystem nach mindestens einem der vorangegangenen Ansprüche dadurch gekennzeichnet, daß
die zentrale Hohlwelle (16) wahlweise mit innenliegenden Spiralzügen ausgestattet werden kann.

4. Verbrennungssystem nach mindestens einem der vorangegangenen Ansprüche dadurch gekennzeichnet, daß die Turbinenschaufeln (17) perforierte Hohlräume aufweisen, die zusammen mit den Außenflächen der Turbinenschaufeln (17) mit der komprimierten Ansaugluft beaufschlagt werden.

5. Verbrennungssystem nach mindestens einem der vorangegangenen Ansprüche dadurch gekennzeichnet, daß die zentrale Hohlwelle (16) einen perforierten Auslauftrichter aufweist.

6. Verbrennungssystem nach mindestens einem der vorangegangenen Ansprüche dadurch gekennzeichnet, daß im Auslauftrichter der Hohlwelle (16) ein spiralförmiger Primärbereich der Flamme ausgebildet ist, wobei
die rezirkulierenden Verbrennungsgase erst in einem Sekundärbereich der Flamme auf die Ränder der Flammspirale auftreffen.

7. Verbrennungssystem nach mindestens einem der Ansprüche 2 bis 6 dadurch gekennzeichnet, daß
der Elektromotor (7) auf der zentralen Hohlwelle (16) wahlweise in der Umkehrphase als Elektrogenerator (7) betrieben werden kann.

8. Verbrennungssystem nach mindestens einem der Ansprüche 2 bis 7 dadurch gekennzeichnet, daß
die beim Verbrennungsprozeß gewonnene Elektroenergie, wahlweise in Elektrobatterien (49) gespeichert wird, oder über eine Elektroheizmatte (25) als Wärmeenergie an einen Heizkessel (3) abgegeben wird.

9. Verbrennungssystem nach mindestens einem der vorangegangenen Ansprüche dadurch gekennzeichnet, daß
die Mengenregulierung der rezirkulierenden Verbrennungsgase von dem Abgasventil (35, 37, 38 und 39) übernommen wird.

10. Verbrennungssystem nach mindestens einem der vorangegangenen Ansprüche dadurch gekennzeichnet, daß
die Stellung des Abgasventiltellers (35) sowohl gleitend, intermittierend, in offener und auch in geschlossener Stellung gefahren werden kann.

11. Verbrennungssystem nach mindestens einem der vorangegangenen Ansprüche dadurch gekennzeichnet, daß
die inneren Bauteile (31, 32, 33 und 34) der Brennkammer- Baugruppe (2) aus oberflächen vergüteten Keramikfasern bestehen.

12. Verbrennungssystem nach mindestens einem der vorangegangenen Ansprüche 8 bis 11 dadurch gekennzeichnet, daß der obere Teil des Heizkessels (3) eine erste Wärmeübertragungsfläche (23, 24, und 64) - (Hochtemperaturzone) und der untere Teil des Heizkessels (3) - (Niedertemperaturzone) - (36, 47 und 54) eine zweite Wärmeübertragungsfläche aufweist.

13. Verbrennungssystem nach mindestens einem der vorangegangenen Ansprüche dadurch gekennzeichnet, daß
ein Abgas- Restwärmetauscher (36, 47 und 54) - (Baugruppe 4), eine Kondensatauffangwanne und ein Neutralisationsbecken (56, 58, 59, 60 und 61) sich ebenfalls in die gemeinsame, zentral- symmetrische Längsachse der übrigen Baugruppen, innerhalb einer wärmeisolierten Außenhülle (48), einordnen.

14. Verfahren zum Betreiben eines Verbrennungssystems nach mindestens einem der Ansprüche 2 bis 13, dadurch gekennzeichnet, daß in der Startphase die Axial-Turbine (17) vom Elektromotor (7) angetrieben wird.

## Claims

1. Combustion system for heating and propulsion purposes with circulation of the combustion gases, comprising a central symmetrically constructed combustion chamber (28) unit (figure 1) and a combustion gas recirculation channel (26, 27, 29 and 30) radially configured as an external part of the combustion chamber and extending in the longitudinal direction of the combustion chamber unit, characterized in that an axial turbine (17) is arranged on an end of a central hollow shaft (16) in the vicinity of the radial circulation channel (29) directly before the entrance to the flame region of the combustion chamber (28), and the centrifugally rotating fuel and the pressurized air mixture (11, 14 and 15) gain entrance to the combustion chamber (28) via the central hollow shaft (16), and an exhaust gas valve (35, 37, 38 and 39) lying centrally symmetric across from the burner regulates the feed-off of the exhaust gases, and the walls in contact with combustion gas in the vicinity of the recirculation channel and of the combustion chamber (28, 29, 30, 31, 32, 33, 34 and 64) exhibit flat low friction surfaces and a rounded shape.

2. Combustion system according to claim 1, characterized in that all burner components such as the fuel supply pump (6), the electric motor/electric generator (7), the radial compressor fan (14) and the axial turbine (17) are mounted on the central hollow shaft (16).

3. Combustion system according to at least one of the preceding claims, characterized in that the central hollow shaft (16) can be optionally configured with an internal spiral track.

4. Combustion system according to at least one of the preceding claims, characterized in that the turbine plates (17) exhibit perforated hollow regions which together with the outer surfaces of the turbine plates (17) can be subjected to the compressed suction air.

5. Combustion system according to at least one of the preceding claims, characterized in that the central hollow shaft (16) exhibits a perforated exhaust guide.

6. Combustion system according to at least one of the preceding claims, characterized in that a spiral shaped primary region of the flame is formed in the exhaust guide of the hollow shaft (16), whereby the recirculating exhaust gases first contact the edges of the flame spiral in a secondary region of the flame.

7. Combustion system according to at least one of the claims 2 through 6, characterized in that the electric motor (7) on the central hollow shaft (16), can optionally be driven in an inverted phase as an electrical generator (7).

8. Combustion system according to at least one of the claims 2 through 7, characterized in that the electrical energy gained by the combustion process can be optionally stored in electrical batteries (49) or be given up to the heating boiler (3) as heat energy via an electrical heating pad (25).

9. Combustion system according to at least one of the preceding claims, characterized in that the amount regulation of the amount of recirculating combustion gases is done by the exhaust gas valve (35, 37, 38 and 39).

10. Combustion system according to at least one of the preceding claims, characterized in that the adjustment of the exhaust gas valve head (35) can be driven in the open as well as in a closed position in a continuous as well as in an intermittent fashion.

11. Combustion system according to at least one of the preceding claims, characterized in that the internal components (31, 32, 33 and 34) of the combustion chamber elements (2) are comprised from ceramic fibers with improved surface quality.

12. Combustion system according to at least one of the preceding claims 8 through 11, characterized in that the upper region of heating boiler exhibits a first heat exchanging surface (23, 24 and 64) - (high temperature region) and the lower portion of the heating boiler (3) - (low temperature area) - (36, 47 and 54) exhibits a second heat exchanging surface.

13. Combustion system according to at least one of the preceding claims, characterized in that an exhaust gas residual heat exchanger (36, 47 and 54) - (component group 4), a condensed substance collection pan and an neutralization pan (56, 58, 59, 60 and 61) are all located in the common heat insulating outer jacket (48) arranged centrally symmetric along the longitudinal axis of the remaining component groups.

14. Method for the operation of a combustion system according to at least one of the claims 2 through 13, characterized in that the axial turbine (17) is driven by an electric motor (7) during the starting phase.

## Revendications

1. Système de combustion pour des fins de chauffage et d'entraînement, comportant une recirculation des gaz de combustion, constitué d'une unité d'ensembles constitutifs (figure 1), de la chambre de combustion (28), construite symétriquement au centre et d'un canal de recirculation des gaz de combustion (26, 27, 29 et 30) situé à l'extérieur en tant que partie de la chambre de combustion, agencé radialement et s'étendant dans la direction longitudinale de l'ensemble constitutif de la chambre de combustion, caractérisé en ce que :
une turbine axiale (17) est agencée à l'extrémité d'un arbre creux (16) central, dans la zone du canal de recirculation (29) agencé radialement, directement avant l'entrée dans la zone de la flamme de la chambre de combustion (28),
au moyen de l'arbre creux central (16) le combustible, en tournant de façon centrifugée, et le mélange d'air, alimenté sous pression (11, 14 et 15), parviennent dans la chambre de combustion (28),
une vanne de gaz de fumée (35, 37, 38 et 39) opposée symétriquement, au centre, au brûleur règle l'évacuation des gaz de fumée et
les parois en contact avec le gaz de combustion présentent dans la zone du canal de recirculation et de la chambre de combustion (28, 29, 30, 31, 32, 33, 34 et 64) des surfaces unies et à faible frottement et une forme arrondie.

2. Système de combustion suivant la revendication 1, caractérisé en ce que sur l'arbre creux central (16) sont montés tous les composants de brûleur comme la pompe d'alimentation en combustible (6), le moteur électrique/générateur électrique (7), la soufflante de compression radiale (14) et la turbine axiale (17).

3. Système de combustion suivant l'une des revendications précédentes, caractérisé en ce que l'arbre creux central (16) peut être équipé sélectivement de parcours hélicoïdaux situés à l'intérieur.

4. Système de combustion suivant au moins l'une des revendications précédentes, caractérisé en ce que les ailettes de turbine (17) présentent des cavités perforées qui sont alimentées, en même temps que les surfaces externes des ailettes de turbine (17), avec de l'air d'aspiration comprimé.

5. Système de combustion suivant au moins l'une des revendications précédentes, caractérisé en ce que l'arbre creux central (16) présente un entonnoir de sortie perforé.

6. Système de combustion suivant au moins l'une des revendications précédentes, caractérisé en ce que dans l'entonnoir de sortie de l'arbre creux (16) est réalisée une zone primaire, de forme hélicoïdale, de la flamme, les gaz de combustion qui recirculent butant d'abord, dans une zone secondaire de la flamme, sur les bords de l'hélice de flamme.

7. Système de combustion suivant l'une au moins des revendications 2 à 6, caractérisé en ce que le moteur électrique (7), sur l'arbre central creux (16), peut être actionné sélectivement en tant que générateur électrique (7) dans la phase d'inversion.

8. Système de combustion suivant l'une au moins des revendications 2 à 7, caractérisé en ce que l'énergie électrique produite lors du processus de combustion est stockée sélectivement dans des batteries électriques (49) ou est fournie à une chaudière (3) sous forme d'énergie thermique par l'intermédiaire d'une jaquette à chauffage électrique (25).

9. Système de combustion suivant l'une au moins des revendications précédentes, caractérisé en ce que le réglage de quantités des gaz de combustion qui recirculent est pris en charge par la vanne de gaz de fumée (35, 37, 38 et 39).

10. Système de combustion suivant au moins l'une des revendications précédentes, caractérisé en ce que le réglage de la soupape de gaz de fumée (35) peut être exécuté de façon coulissante, intermittente, tant en position ouverte qu'également en position fermée.

11. Système de combustion suivant au moins l'une des revendications précédentes, caractérisé en ce que les éléments constitutifs internes (31, 32, 33 et 34) de l'ensemble constitutif (2) de chambre de combustion sont constitués de fibres céramiques traitées superficiellement.

12. Système de combustion suivant au moins l'une des revendications 8 à 11 précédentes, caractérisé en ce que la partie supérieure de la chaudière (3) présente une première surface de transmission de chaleur (23, 24 et 64) (zone de haute température) et en ce que la partie inférieure de la chaudière (3) présente une seconde surface de transmission de chaleur (36, 47 et 54) (zone de température basse).

13. Système de combustion suivant au moins l'une des revendications précédentes, caractérisé en ce qu'un échangeur de chaleur résiduelle, de gaz de fumée, (36, 47 et 54) (ensemble constitutif 4), une cuve de réception de condensation et un réservoir de neutralisation (56, 58, 59, 60 et 61) sont agencés également selon l'axe longitudinal commun symétrique, au centre, des ensembles constitutifs restants, dans une enveloppe externe (48) d'isolation thermique.

14. Procédé pour la commande d'un système de combustion suivant au moins l'une des revendications 2 à 13, caractérisé en ce que, dans la phase de démarrage, la turbine axiale (17) est entraînée par le moteur électrique (7).
